# FASCICULE DE BREVET EUROPEEN

(11) **EP 2 374 195 B1**
(45) Date de publication et mention de la délivrance du brevet: **27.07.2016**
(21) Numéro de dépôt: 09801746.0
(22) Date de dépôt: 08.12.2009
(51) Int. Cl.: H02J 7/00, H04M 19/08

(54) **UNITE POUR LE CHARGEMENT D'UNE BATTERIE DE DISPOSITIF ELECTRIQUE PORTABLE**
EINHEIT ZUM LADEN EINER BATTERIE EINER TRAGBAREN ELEKTRISCHEN EINRICHTUNG
UNIT FOR CHARGING A BATTERY OF A PORTABLE ELECTRIC DEVICE

(30) Priorité: 09.12.2008 FR 0858396
(43) Date de publication de la demande: 12.10.2011
(73) Titulaire: Lecarpentier, Romain Marie Michel, 38090 Villefontaine (FR); Lecuyer, Yves, 69002 Lyon (FR); Kramp, Jean Luc, 69510 Thurins (FR)
(72) Inventeur: Lecarpentier, Romain Marie Michel, 38090 Villefontaine (FR); Lecuyer, Yves, 69002 Lyon (FR); Kramp, Jean Luc, 69510 Thurins (FR)
(74) Mandataire: Verriest, Philippe
(86) Numéro de dépôt international: PCT/FR2009/052444
(87) Numéro de publication internationale: WO 2010/067006

(56) Documents cités:
- DE-A1- 10 218 124
- GB-A- 2 395 847
- GB-A- 2 440 007
- US-A- 5 744 933
- US-A1- 2003 141 840
- US-A1- 2005 156 560
- US-A1- 2008 170 355
- US-B1- 6 498 457
- STAY MOBILE TECHNOLOGY: "BuzzBox Information Pack" INTERNET CITATION, [Online] 20 juillet 2006 (2006-07-20), page 9PP, XP007909423 Extrait de l'Internet: URL:http://www.rentrain.com/library_files/ 1044.pdf> [extrait le 2009-08-04]

## Description

La présente invention concerne une unité, adaptée pour charger la batterie de dispositifs électriques portables, tels que les téléphones portables, les lecteurs MP3 ou tout autre dispositif électrique utilisant une batterie.

De tels dispositifs comprennent une batterie dont le niveau de charge détermine directement l'autonomie du dispositif même. Si l'utilisation du dispositif se prolonge, il devient alors nécessaire de procéder à la charge de la batterie. De manière conventionnelle, il est utilisé un chargeur de batterie comprenant un élément de raccordement directement adaptable à l'une des sorties du dispositif électrique. L'utilisateur doit également se trouver à proximité d'une prise électrique de manière à pouvoir brancher directement le chargeur sur cette prise.

Toutefois, chaque marque de dispositif électrique ne permet généralement l'utilisation que d'un seul type de chargeur de batterie. Cette compatibilité est parfois même limitée à un seul modèle de dispositif électrique de la marque même. La recharge en courant électrique d'une batterie du dispositif est alors contraignante pour l'utilisateur.

GB-A-2 440 007 comporte différents éléments de raccordement filaire pour recharger différents dispositifs électriques, selon le préambule de la revendication 1. Cependant, il existe des dispositifs électriques dont les connecteurs filaires sont incompatibles avec l'unité de GB-A-2 440 007. De plus, un chargement filaire peut s'avérer relativement long à accomplir.

Le but de la présente invention est de prévoir une unité pour le chargement d'une batterie de dispositif électrique permettant à l'utilisateur de charger son dispositif électrique de manière aisée, et de préférence de manière rapide, notamment dans des lieux publics.

A cet effet, l'invention a pour objet une unité pour le chargement d'une batterie de dispositif électrique portable, selon la revendication indépendante 1.

Grâce à l'unité pour le chargement selon l'invention, l'utilisateur peut charger son dispositif électrique de manière facile, pratique et sécurisé.

L'invention est définie par les caractéristiques de la revendication indépendante. Les modes de réalisations préferés sont définis par les revendications dépendantes.

L'invention sera mieux comprise à la lecture de la description qui va suivre, donnée uniquement à titre d'exemple non limitatif et faite en se référant aux dessins sur lesquels :
- la figure 1 représente une vue schématique en perspective d'une unité pour le chargement d'une batterie de dispositif électrique portable selon la présente invention ;
- la figure 2 représente une vue schématique en perspective de l'unité pour le chargement d'une batterie de dispositif électrique en cours d'utilisation ;
- la figure 3 représente une vue schématique en perspective d'un casier isolé de l'unité, la porte du casier étant ouverte ; et
- la figure 4 représente une vue schématique en perspective du casier en cours d'utilisation.

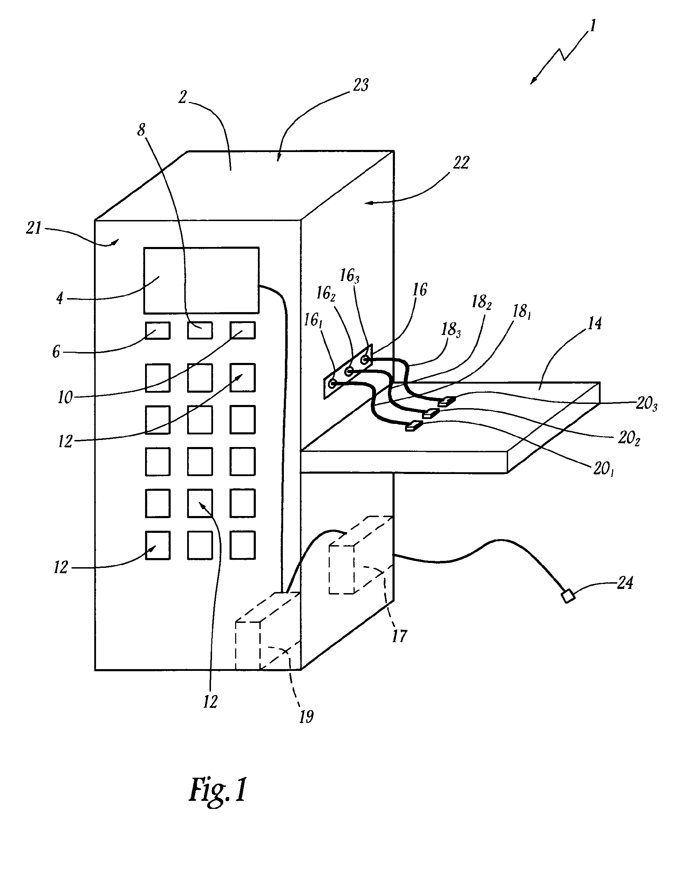

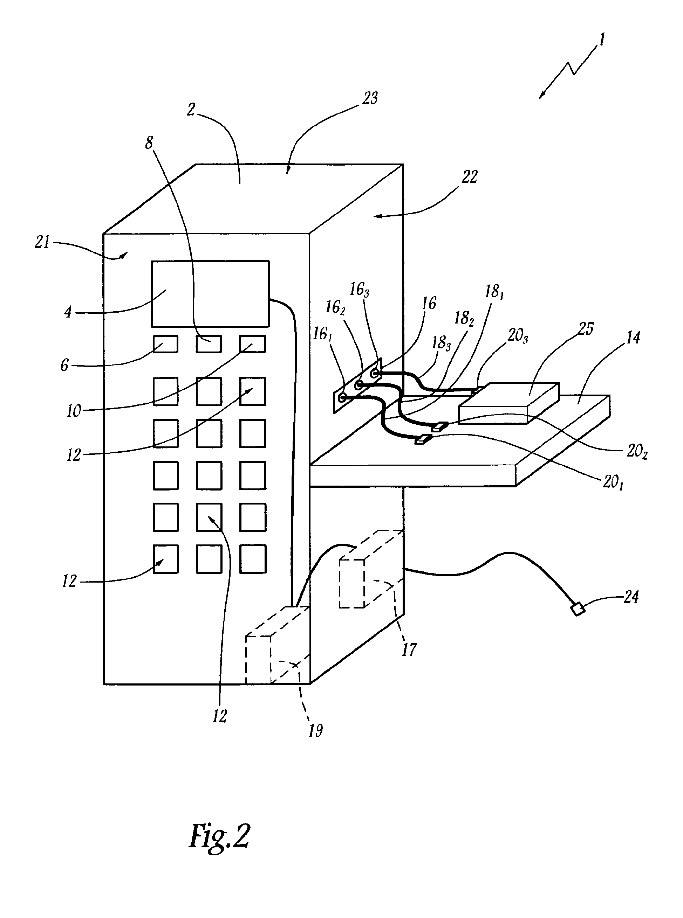

Les figures 1 et 2 représentent une unité 1 permettant le chargement d'une batterie de dispositif électrique. L'unité 1 comprend un caisson 2 sensiblement en forme de parallélépipède. Sur les figures 1 et 2 sont visibles une face avant 21, une paroi latérale 22 adjacente à la face avant ainsi qu'une face supérieure 23.

Sur la face avant 21 est disposé un moyen de sélection 4 placé au-dessus d'une imprimante de tickets de récépissés 10, d'un clavier numérique 8 et d'un lecteur 6 de carte de paiement magnétique et/ou à puce. Le clavier numérique 8 est disposé entre le lecteur 6 et l'imprimante 10. Le moyen de sélection 4 est un écran de commande tactile. A titre d'alternative, le moyen de sélection peut comprendre des boutons, des molettes ou encore des barillets de commande.

Sur la partie centrale de la face avant 21 sont disposés des casiers 12, au nombre de douze, répartis de manière sensiblement régulière sur quatre rangées et trois colonnes.

Le caisson 2 comprend également une prise électrique 24 destinée à assurer l'alimentation électrique de l'unité 1. La prise est adaptée pour fonctionner avec une tension pouvant être, à titre d'exemple, de 220 volts. La prise 24 est raccordée à une unité de fourniture d'énergie électrique 17. L'unité 17 est pilotée par une unité de commande 19 en rapport avec les instructions données par l'utilisateur au moyen de l'écran 4.

En outre, le caisson 2 peut être monté sur des moyens de déplacement non représentés, de manière à faciliter son positionnement stratégique dans des lieux publics. A titre d'exemple non limitatif, les moyens de déplacement peuvent être quatre roulettes disposées respectivement aux quatre coins de la face inférieure du caisson 2.

Une tablette 14 est disposée de manière solidaire et perpendiculaire à la face latérale 22. A titre d'exemple, la tablette 14 peut être fixée au moyen de vis ou par collage. De manière avantageuse, la tablette 14 est placée à une hauteur permettant à un utilisateur de taille moyenne de poser ses coudes sur la tablette, lorsqu'il est en position dite debout devant l'unité 1. Sur la partie de la paroi latérale 22 située au-dessus de la tablette 14 est disposé un socle 16 comprenant trois ouvertures 16₁, 16₂ et 16₃. Les trois ouvertures laissent respectivement passer trois fils de raccordement 18₁, 18₂ et 18₃ qualifiés d'extérieurs aux extrémités desquelles sont fixés trois éléments de raccordement 20₁, 20₂ et 20₃ dits également extérieurs.

On notera que la longueur des fils de raccordement permet aux éléments de raccordement de reposer sur la tablette 14. On peut prévoir également l'absence de la tablette 14. Dans ce cas de figure, les éléments de raccordement pendent dans le vide. Il peut être aussi prévu de fixer une tablette sur la face arrière et/ou sur la deuxième paroi latérale disposée de manière opposée à la paroi 22 par rapport à la face avant 21.

Sur la figure 2 est représentée l'unité 1 en cours d'utilisation. L'élément de raccordement 20₃ est fixé à un dispositif électrique 25, le dispositif étant en appui sur la tablette 14. Ainsi, il est défini une zone de chargement dite extérieure ou ouverte, équipée de trois interfaces de couplages comprenant les trois fils de raccordement et les trois éléments de raccordement.

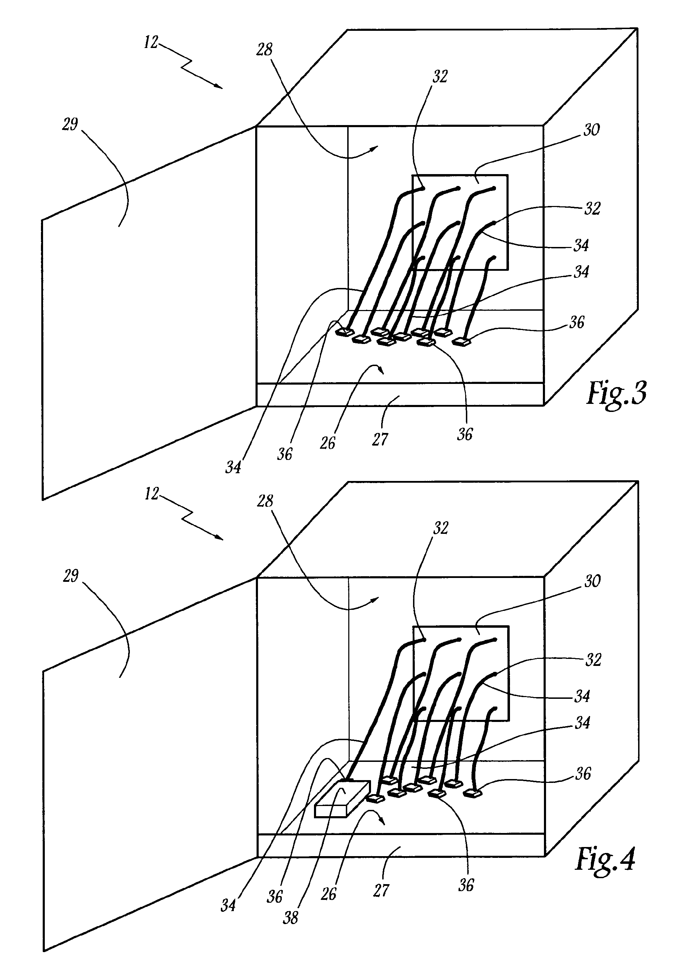

La figure 3 représente un agrandissement d'un des casiers 12 de l'unité 1. Le casier 12 comprend une porte 29 qui est en position ouverte sur la figure 3, alors qu'elle est en position fermée sur les figures 1 et 2 pour chacun des douze casiers. Le casier comprend en outre un plancher 26 ainsi qu'un fond 28, disposé, à la fois, perpendiculairement au plancher 26 et parallèlement à la porte 29 lorsque la porte est en position dite fermée. Le plancher 26 comprend en outre un rebord 27 adjacent à la porte 24, lorsque la porte est fermée. Le plancher 26 peut être constitué d'un bac recouvert de silicone. Le bac peut être amovible ou solidaire du casier 12. De manière alternative, un moyen de réception d'un dispositif électronique peut être un support fixé sur une face intérieure de la porte 29. Le support peut avoir la structure souple d'une pochette. On peut également envisager une armature rigide. A titre d'exemple non limitatif, chacun des casiers peut avoir une hauteur d'environ 20 cm, une profondeur d'environ 15 cm ainsi qu'une largeur d'environ 15 cm.

Avantageusement, la porte 29 est en partie transparente.

Sur le fonds 28 est fixé un socle 30 comprenant neuf trous 32, régulièrement répartis sur le socle. Ces trous 32 sont formés sensiblement de manière adjacente à neuf autres trous réalisés dans le fond 28. Il est à noter que l'on peut s'affranchir de la présence d'un socle 30. Chacun des trous permet le passage d'un fil de raccordement 34 qualifié d'intérieur. Chacun de ces fils de raccordement comprend à une de ces extrémités un élément de raccordement 36 d'intérieur. La seconde extrémité de chacun des fils 34 est, à titre d'exemple, solidaire d'une borne électrique non représentée, permettant d'assurer l'alimentation en courant électrique des fils 34 et des éléments de raccordement 36. En effet, la borne électrique est raccordée à l'unité 17 de fourniture d'énergie électrique. Le caisson 2 peut comprendre une pluralité de borniers, ces borniers pouvant eux-mêmes être munis de plusieurs bornes électriques. La longueur des fils de raccordement 34 est telle que les éléments de raccordement 36 sont en appui sur le plancher 26.

Ainsi, dans chacun des casiers est aménagée une zone de chargement qualifiée d'intérieure ou de sécurisée, équipée de neuf interfaces de couplage, définie chacune par le fil de raccordement 34 et l'élément de raccordement 36.

Chacun des éléments de raccordement 36 est adapté pour pouvoir être fixé à un dispositif électrique donné. Il est à noter que le nombre d'éléments de raccordement 36 n'est pas nécessairement limité à neuf. En effet, on peut prévoir un nombre d'éléments de raccordement adapté pour permettre de couvrir, par exemple, 80% du marché des téléphones portables ainsi que 80% du marché des lecteurs numériques de type MP3. L'exploitant de l'unité 1 peut continuellement s'adapter à la tendance du marché des dispositifs électroniques en remplaçant simplement l'élément de raccordement désuet par un nouvel élément de raccordement.

De la même manière, le nombre d'éléments de raccordement extérieurs 20₁, 20₂, 20₃ n'est pas obligatoirement limité à 3.

Avantageusement, les fils de raccordement 18₁, 18₂, 18₃ et 34 sont connectés chacun par une prise jack à un bornier comprenant des fiches jack correspondantes. Ainsi, les fils disposés dans le casier 12 ou sur la face latérale extérieure 22 sont facilement échangeables ou interchangeables.

De manière avantageuse, l'élément de raccordement 36 d'au moins deux interfaces de couplage peut être simplement une broche. Ainsi, les deux broches peuvent être fixées directement sur la batterie. Ce système est notamment adapté pour le chargement de batterie utilisée par d'anciens modèles de téléphones portables.

Chacun des casiers 12 peut contenir un moyen de verrouillage non représenté sur les figures. Le moyen de verrouillage peut être, à titre d'exemple non limitatif, une languette disposée sur une bordure de la porte 29. Cette languette mobile peut être adjacente à une ouverture formée dans le caisson 2 de manière adjacente à l'armature du casier. Lorsque la languette est reçue par l'ouverture, le casier 12 est dans une configuration dite verrouillée. Le mouvement de la languette peut être piloté par l'unité de commande 19. A titre d'alternatives, on peut prévoir des moyens de verrouillage magnétiques dont la gestion est également assurée par l'unité de commande 19. Ainsi, la fermeture des casiers s'effectuant sans clé, on évite tout risque de perte d'une telle clé par l'utilisateur de l'unité 1.

Par ailleurs, de manière alternative à la porte 29 dite battante, il peut être prévu d'utiliser une porte dite coulissante pour chacun des casiers 12. Le volet constituant la porte est alors adapté pour coulisser le long de l'armature du casier 12.

La figure 4 représente le casier 12 avant l'utilisation imminente de l'unité 1. Un dispositif électronique 38 est solidaire d'un élément de raccordement 36. On notera que la présence du rebord 27 permet d'éviter une chute du dispositif 38.

Les interfaces de couplage peuvent comprendre notamment des éléments de raccordement adaptés pour se fixer à des téléphones portables. Par ailleurs, ce type d'interface peut également comprendre un élément de raccordement de type prise USB ou adapté pour se connecter à un dispositif multimédia de type IPHONE ou IPOD.

Lorsqu'un usager considère que son dispositif électrique a une autonomie insuffisante, il se place devant l'unité 1 et choisit sur le moyen de sélection 4 la fonction visant à lui permettre de charger la batterie de son dispositif. Il insère ensuite sa carte de paiement dans le lecteur 6 et tape son code confidentiel à quatre chiffres. A cet instant, l'empreinte de la carte est prise. Ces différentes opérations sont gérées par l'unité de commande 19 grâce au moyen de sélection 4.

L'usager choisit ensuite soit un des casiers 12 disponible soit la zone de chargement ouverte disposée sur la tablette 14. S'il choisit un des casiers 12, la porte 29 est déverrouillée par l'unité de commande 19 et l'usager peut procéder à son ouverture manuellement. L'usager peut alors connecter son dispositif électrique à l'élément de raccordement 36 directement adaptable à son dispositif.

Une fois cette opération effectuée, la fermeture du casier s'opère et le chargement du dispositif en courant électrique peut commencer. La distribution d'énergie électrique par l'unité de fourniture 17 est alors autorisée par l'unité de commande 19.

De manière à améliorer la sécurité, il peut être demandé à l'utilisateur d'indiquer un code à quatre chiffres en plus de celui de la carte bancaire. Ainsi, un tiers mal intentionné, se procurant la carte de paiement de l'usager, ne peut être en mesure de récupérer le dispositif électrique en cours de chargement dans l'unité 1.

Si l'utilisateur sélectionne la zone de chargement extérieure disposée sur la face latérale 22, la distribution de l'énergie électrique est gérée de la même manière que précédemment. Le chargement de la batterie peut ainsi s'effectuer pendant que l'utilisateur fait usage de son téléphone.

L'unité de commande 19, par actionnement du moyen de sélection 4, contrôle l'arrivée d'énergie électrique et gère sa distribution de manière à charger la batterie du dispositif électrique.

Lorsque l'utilisateur souhaite récupérer son dispositif électrique, il commence par sélectionner sur le moyen de sélection 4 la fonction adéquate. L'utilisateur insère sa carte de paiement et indique le code confidentiel à quatre chiffres. Il est à présent identifié. L'unité de commande 19 stoppe la distribution de courant électrique par l'unité de fourniture 17. Par la suite, la porte battante 29 du casier 12 utilisée se déverrouille et l'usager peut ouvrir la porte. Il peut alors récupérer son dispositif en le déconnectant de son élément de raccordement. Le déroulement des opérations est sensiblement similaire si l'utilisateur a sélectionné la zone de chargement extérieure.

Il est à noter que les étapes de la méthode d'utilisation de l'unité 1 ainsi que leur enchaînement ont été indiquées à titre purement indicatif et non restrictif.

Il peut être prévu que l'utilisateur sélectionne une somme d'argent prédéfinie qui est alors débitée de son compte et qui est convertie en quantité d'énergie électrique délivrée pendant l'étape de charge, en incluant le coût forfaitaire du service, par l'unité de commande 19. Cela permet ainsi à l'utilisateur de contrôler son budget.

On notera que le moyen de sélection 4 est commun à toutes les zones de chargement, à savoir les zones de chargement sécurisées aménagées dans les casiers 12 et la zone de chargement ouverte disposée le long de la paroi latérale 22.

De plus, l'unité 1 comprend au moins une interface de couplage non filaire. En d'autres termes, l'interface de couplage sans fil comprend un premier module disposé dans une des zones de chargement. Le dispositif électronique est équipé d'un deuxième module. L'unité de commande 19 peut alors autoriser le chargement de la batterie du dispositif électronique par couplage électromagnétique entre les deux modules. On peut ainsi prévoir de mettre en oeuvre par tout moyen approprié un système de transfert de puissance ne nécessitant pas de contact électrique direct entre la batterie du dispositif portable et la zone de chargement. Cette technologie peut également permettre de réaliser un chargement total de la batterie en quinze minutes environ. Ceci est à mettre en perspective par rapport à un chargement filaire standard durant environ deux heures.

Avantageusement, il peut être prévu de charger simultanément plusieurs dispositifs électriques dans le même casier 12.

Par ailleurs, on peut prévoir des moyens de paiement autres que l'utilisation d'une carte bancaire. A cet effet, le caisson 2 peut comprendre un dispositif permettant d'insérer des pièces de monnaie ou des billets de banque.

A titre indicatif, l'unité 1 peut avoir une hauteur comprise entre 1,50 mètre et 2 mètres, une largeur comprise entre 50 cm et 1 mètre ainsi qu'une profondeur comprise entre 50 cm et 1 mètre.

En outre, le caisson 2 comprend les éléments électriques classiques nécessaires pour le fonctionnement de l'unité 1, à savoir notamment un coffret électrique de puissance, un transformateur de puissance, des disjoncteurs de sécurité, les alimentations électriques du lecteur 6, du clavier 8, de l'imprimante 10 et du moyen de sélection 4.

## Revendications

1. Unité (1) pour le chargement d'une batterie de dispositif électrique portable, comprenant :
- une unité de fourniture d'énergie électrique (17),
- un casier (12) comprenant une porte (29),
- au moins une zone de chargement ménagée dans le casier (12), ladite zone de chargement étant équipée d'interfaces de couplage (18₁, 20₁, 18₂, 20₂, 18₃, 20₃ ; 34, 36) qui sont chacune adaptées pour permettre une connexion ou un couplage entre un dispositif électrique portable (25, 38) et l'unité de fourniture (17), au moins deux interfaces de couplage (18₁, 20₁, 18₂, 20₂, 18₃, 20₃ ; 34, 36) comprenant chacune un élément de raccordement (20₁, 20₂, 20₃ ; 36) à un téléphone portable (25, 38),
- un moyen de sélection (4), adapté pour permettre la sélection par un utilisateur d'au moins une parmi les interfaces de couplage, et
- une unité de commande (19) qui est adaptée pour commander l'unité de fourniture d'énergie électrique (17) en fonction de la sélection de l'utilisateur, **caractérisée en ce qu'**au moins une des interfaces de couplage comprend un premier module disposé dans au moins une zone de chargement et adapté pour transmettre à un deuxième module, disposé dans au moins un dispositif électrique portable (25, 38), l'énergie électrique par couplage électromagnétique,
l'unité de commande (19) étant adaptée pour autoriser le chargement de la batterie du dispositif électronique par couplage électromagnétique entre le premier module et le second module.

2. Unité selon la revendication 1, **caractérisée en ce que** l'unité de commande (19) est adaptée pour piloter des moyens de verrouillage et/ou de déverrouillage de la porte (29) ou d'au moins une des portes.

3. Unité selon la revendication 1 ou 2 **caractérisée en ce que** la porte (29) ou au moins une des portes est en partie transparente.

4. Unité selon l'une quelconque des revendications précédentes, **caractérisée en ce qu'**au moins une des interfaces de couplage (18₁, 20₁, 18₂, 20₂, 18₃, 20₃ ; 34, 36) comprend un élément de raccordement (20₁, 20₂, 20₃ ; 36) de type prise USB.

5. Unité selon l'une quelconque des revendications précédentes, **caractérisée en ce que** le moyen de sélection comprend un écran de commande (4).

6. Unité selon l'une quelconque des revendications précédentes, **caractérisée en ce qu'**elle comprend en outre des moyens de paiement (6, 8, 10), l'unité de commande (19) étant adaptée pour permettre la fourniture d'une quantité d'énergie correspondant à la somme payée par l'utilisateur ou pour faire payer à l'utilisateur la somme d'argent correspondant à la quantité d'énergie électrique fournie pour charger la batterie de son dispositif électrique.

## Patentansprüche

1. Einheit (1) zum Aufladen einer tragbaren elektrischen Vorrichtung, die Folgendes umfasst:
- eine Einheit zur Lieferung elektrischer Energie (17),
- ein Gehäuse (12), das eine Tür (29) umfasst,
- mindestens eine Aufladezone, die in dem Gehäuse (12) eingerichtet ist, wobei die Aufladezone mit Kopplungsschnittstellen (18₁, 20₁, 18₂, 20₂, 18₃, 20₃; 34, 36) ausgestattet ist, die jeweils angepasst sind, um eine Verbindung oder ein Koppeln zwischen einer tragbaren elektrischen Vorrichtung (25, 38) und der Liefereinheit (17) zu erlauben, wobei mindestens zwei Kopplungsschnittstellen (18₁, 28₁, 18₂, 20₂, 18₃, 20₃; 34, 36) jeweils ein Element (20₁, 20₂, 20₃; 36) zum Anschließen an ein tragbares Telefon (25, 38) umfassen,
- ein Auswahlmittel (4), das angepasst ist, um die Auswahl durch einen Benutzer mindestens einer der Kopplungsschnittstellen zu erlauben, und
- eine Steuereinheit (19), die angepasst ist, um die Einheit zur Lieferung elektrischer Energie (17) in Abhängigkeit von der Auswahl des Benutzers zu steuern,
**dadurch gekennzeichnet, dass** mindestens eine der Kopplungsschnittstellen ein erstes Modul umfasst, das in mindestens einer Aufladezone angeordnet und angepasst ist, um an ein zweites Modul, das in mindestens einer tragbaren elektrischen Vorrichtung (25, 38) angeordnet ist, die elektrische Energie durch elektromagnetische Kopplung zu übertragen,
wobei die Steuereinheit (19) angepasst ist, um das Aufladen der Batterie der elektronischen Vorrichtung durch elektromagnetisches Koppeln zwischen dem ersten Modul und dem zweiten Modul zu gestatten.

2. Einheit nach Anspruch 1, **dadurch gekennzeichnet, dass** die Steuereinheit (19) angepasst ist, um Verriegelungsmittel und/oder Entriegelungsmittel der Tür (29) oder mindestens einer der Türen zu steuern.

3. Einheit nach Anspruch 1 oder 2, **dadurch gekennzeichnet, dass** die Tür (29) oder mindestens eine der Türen zum Teil durchsichtig ist.

4. Einheit nach einem der vorhergehenden Ansprüche, **dadurch gekennzeichnet, dass** mindestens eine der Kopplungsschnittstellen (18₁, 20₁, 18₂, 20₂, 18₃, 20₃; 34, 36) ein Anschlusselement (20₁, 20₂, 20₃; 36) des Typs USB-Anschluss umfasst.

5. Einheit nach einem der vorhergehenden Ansprüche, **dadurch gekennzeichnet, dass** das Auswahlmittel einen Steuerbildschirm (4) umfasst.

6. Einheit nach einem der vorhergehenden Ansprüche, **dadurch gekennzeichnet, dass** sie außerdem Zahlungsmittel (6, 8, 10) umfasst, wobei die Steuereinheit (19) angepasst ist, um das Liefern einer Energiemenge zu erlauben, die dem vom Benutzer bezahlten Betrag entspricht, oder um den Benutzer den Geldbetrag, der der elektrischen Energie entspricht, die zum Aufladen der Batterie seiner elektrischen Vorrichtung geliefert wird, bezahlen zu lassen.

## Claims

1. A unit (1) for charging a battery of a portable electric device, comprising:
- a supply unit of electric energy (17)
- a compartment (12) comprising a door (29),
- at least one charging area arranged in the compartment (12), said charging area being equipped with coupling interfaces (18₁, 20₁, 18₂, 20₂, 18₃, 20₃; 34, 36) which are each adapted to allow a connection or a coupling between a portable electric device (25, 38) and the supply unit (17), at least two coupling interfaces (18₁, 20₁, 18₂, 20₂, 18₃, 20₃; 34, 36) each comprising a linking member (20₁, 20₂, 20₃; 36) to a cell phone (25, 38),
- a selection means (4), adapted to allow the selection by a user of at least one among the coupling interfaces, and
- a control unit (19) which is adapted to control the supply unit of electric energy (17) depending on the selection of the user,
**characterized in that** at least one of the coupling interfaces comprises a first module disposed in at least one charging area and adapted to transmit to a second module, disposed in at least one portable electric device (25, 38), the electric energy by electromagnetic coupling.
the control unit (19) being adapted to permit the charging of the battery of the electronic device by electromagnetic coupling between the first module and the second module.

2. The unit according to claim 1, **characterized in that** the control unit (19) is adapted to drive means for locking and/or unlocking the door (29) or at least one of the doors.

3. The unit according to claim 1 or 2 **characterized in that** the door (29) or at least one of the doors is partially transparent.

4. The unit according to any one of the preceding claims, **characterized in that** at least one of the coupling interfaces (18₁, 20₁, 18₂, 20₂, 18₃, 20₃; 34, 36) comprises a USB plug-type linking member (20₁, 20₂, 20₃; 36).

5. The unit according to any one of the preceding claims, **characterized in that** the selection means comprises a control screen (4).

6. The unit according to any one of the preceding claims, **characterized in that** it further comprises payment means (6, 8, 10), the control unit (19) being adapted to allow the supply of an amount of energy corresponding to the sum paid by the user or to make the user pay the sum of money corresponding to the amount of electric energy supplied to charge the battery of its electric device.
